(19) Europäisches Patentamt
European Patent Office
Office européen des brevets

(11) **EP 4 022 178 B1**

(12) **EUROPÄISCHE PATENTSCHRIFT**

(45) Veröffentlichungstag und Bekanntmachung des Hinweises auf die Patenterteilung:
**15.11.2023 Patentblatt 2023/46**

(21) Anmeldenummer: **20740292.6**

(22) Anmeldetag: **13.07.2020**

(51) Internationale Patentklassifikation (IPC):
**F01N 3/021** (2006.01)    **F01N 3/20** (2006.01)
**F01N 5/04** (2006.01)    **F01N 9/00** (2006.01)
**F01N 11/00** (2006.01)

(52) Gemeinsame Patentklassifikation (CPC):
**F01N 9/005; F01N 11/005;** F01N 3/021; F01N 3/20;
F01N 3/2006; F01N 5/04; F01N 2430/06;
F01N 2430/08; F01N 2900/0408; F01N 2900/1602;
Y02A 50/20; Y02T 10/12; Y02T 10/40

(86) Internationale Anmeldenummer:
**PCT/EP2020/069711**

(87) Internationale Veröffentlichungsnummer:
**WO 2021/037432 (04.03.2021 Gazette 2021/09)**

(54) **VERFAHREN ZUM EINSTELLEN EINER TEMPERATUR EINER KOMPONENTE EINES ABGASSYSTEMS**

METHOD FOR CONTROLLING A TEMPERATURE OF A COMPONENT OF AN EXHAUST GAS SYSTEM

PROCÉDÉ DE CONTRÔLE D'UNE TEMPÉRATURE D'UN ÉLÉMENT D'UN SYSTÈME DES GAZ D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2019 DE 102019212824**

(43) Veröffentlichungstag der Anmeldung:
**06.07.2022 Patentblatt 2022/27**

(73) Patentinhaber: **Robert Bosch GmbH 70442 Stuttgart (DE)**

(72) Erfinder:
• **ALT, Benedikt**
  **71277 Rutesheim (DE)**
• **HEINRICH, Detlef**
  **71640 Ludwigsburg (DE)**
• **WAGNER, Alexandre**
  **70439 Stuttgart (DE)**

(56) Entgegenhaltungen:
EP-A1- 1 761 693        EP-A2- 1 067 279
EP-A2- 1 329 627        EP-B1- 1 067 279
EP-B1- 1 761 693        DE-A1-102009 051 475
DE-B3-102004 033 394

EP 4 022 178 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Einstellen einer Temperatur einer Komponente eines Abgassystems, insbesondere eines Kraftfahrzeugs, sowie eine Recheneinheit und ein Computerprogramm zu dessen Durchführung.

Stand der Technik

Bei modernen Abgassystemen von bzw. für Brennkraftmaschinen muss die Temperatur jeder einzelnen Komponente in der Regel in einem bestimmten Intervall bzw. Bereich liegen, damit einerseits z.B. bei einem Dreiwegekatalysator eine minimal erforderliche Konvertierungsrate erreicht wird und andererseits bestimmte Komponenten (z.B. eine Turbine eines Turboladers) vor thermischen Schäden geschützt werden. Ebenso muss in der Regel eine bestimmte Temperatur eingestellt werden, um einen Rußabbrand in einem Partikelfilter einzuleiten oder zu stoppen.

Die EP 1 067 279 A2 offenbart ein Modell, mit dem die Temperatur eines Katalysators im Abgassystem bestimmt werden kann. Dabei wird basierend auf einer stromaufwärts des Katalysators im Abgas gemessenen Temperatur die Temperatur innerhalb des Katalysators bestimmt, und zwar an zwei verschiedenen Punkten. Die DE 10 2009 051 475 A1, die DE 10 2004 033 394 B3, die EP 1 761 693 A1 sowie die EP 1 329 627 A2 beschäftigen sich ebenfalls mit Temperaturen im Abgassystem.

Offenbarung der Erfindung

Erfindungsgemäß werden ein Verfahren zum Einstellen einer Temperatur einer Komponente eines Abgassystems sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung betrifft ein Verfahren zum Einstellen einer Temperatur einer Komponente (oder ggf. eines Teils davon) eines an einen Abgasauslass einer Brennkraftmaschine angebundenen bzw. sich daran anschließenden Abgassystems, insbesondere eines Kraftfahrzeugs. Typische Komponenten in einem solchen Abgassystem sind ein Turbolader, ein Katalysator und ein Partikelfilter. Diese einzelnen Komponenten sind dabei in der Regel über entsprechende Rohrleitungen oder ähnlichem miteinander verbunden.

Problematisch ist hier bislang, dass es in vielen Abgassystemen nur wenige oder gar keine Temperatursensoren gibt, die man zur Überwachung von komponentenspezifischen Temperaturbereichen einsetzen könnte. Stattdessen ist es üblich, alle relevanten momentanen Temperaturen im Abgassystem in einer ausführenden Recheneinheit bzw. in einem Steuergerät mit einem echtzeitfähigen Modell ausgehend von der üblichen Sensorik im Luftsystem zu berechnen. Aufgrund der hohen Varianz an Abgassystemen muss dieses Modell aber mit entsprechend hohem Applikationsaufwand an die jeweilige Systemkonfiguration (z.B. mehrere Katalysatoren und Partikelfilter an unterschiedlichen Positionen im Fahrzeug) angepasst werden.

Im Fall eines Ottomotors als Brennkraftmaschine wird das Abgassystem in der Regel aufgeheizt, indem der Zündwinkelwirkungsgrad bewusst verschlechtert wird. Dadurch entsteht Wärme, die stromabwärts das Abgassystem entsprechend aufheizt. Neben dem Zündwinkelwirkungsgrad können aber auch noch weitere Stellgrößen wie z.B. der sog. Lambda-Split-Wert, eine Anhebung der Leerlaufdrehzahl, Späteinspritzung und dergleichen verwendet werden, um das Abgassystem gezielt weiter und schneller aufzuheizen.

Hierzu werden in der Regel quasistationäre Vorsteuerungen verwendet, die zahlreiche Kennfelder enthalten und über die in Abhängigkeit von weiteren Parametern (beispielsweise eine Füllung der Zylinder und dergleichen) in bestimmten Situationen (z.B. nach dem Motorstart) direkt bestimmte Werte für den Zündwinkelwirkungsgrad und die weiteren Stellgrößen vorgegeben werden. Allerdings ist es damit schwierig, gezielt eine bestimmte Temperatur in einer bestimmten Komponente im Abgassystem einzustellen.

Oft gelingt es jedoch nur, die Temperatur so stark zu erhöhen, dass ein bestimmter Minimalwert auf jeden Fall innerhalb einer vorgegebenen Zeitspanne überschritten wird. Dabei besteht jedoch die Gefahr, dass die maximal zulässige Temperatur in dieser Komponente oder in einer anderen Komponente ebenfalls überschritten werden kann. Um diese Verletzung der zulässigen Maximaltemperatur zu verhindern, gibt es in den heutigen Motorsteuergeräten entsprechende Maßnahmen zum Bauteileschutz, die den Zündwinkelwirkungsgrad und die weiteren Stellgrößen entsprechend begrenzen. Da diese Schutzfunktionen unabhängig von den Heizmaßnahmen implementiert sind, müssen diese Schutzfunktionen ebenfalls gesondert appliziert werden.

Bei dem vorgeschlagenen Verfahren wird nun unter Verwendung eines Temperaturmodells des Abgassystems, in dem wenigstens eine Komponente des Abgassystems abgebildet ist, ausgehend von verschiedenen Werten für wenigstens eine, eine Temperatur des Abgassystems beeinflussende Eingangsgröße solange - insbesondere in einem iterativen Verfahren - jeweils eine Temperatur einer bestimmten, in dem Temperaturmodell abgebildeten Komponente des Abgassystems oder eines Teils der Komponente ermittelt, bis ein Wert der Temperatur innerhalb eines vorgegebenen Bereichs liegt bzw. einen vorgegebenen Wert innerhalb bestimmter Toleranzen erreicht hat. Die wenigstens eine Eingangsgröße wird daraufhin auf den zuletzt verwendeten Wert eingestellt. Im Falle mehrerer Eingangsgrößen wird dann für jede Eingangsgröße der jeweils zuletzt, d.h. bei der letzten Iteration, verwendete Wert eingestellt. Denkbar ist auch, für mehrere bestimmte Komponenten oder Teile davon eine entsprechende Temperatur zu ermitteln.

Die wenigstens eine Eingangsgröße umfasst dabei insbesondere einen Zündwinkelwirkungsgrad der Brennkraftmaschine (insbesondere für den Fall eines Ottomotors) und/oder einen Lambda-Split-Wert und/oder einen Abgasmassenstrom und/oder eine Ansteuergröße eines elektrisch zumindest unterstützend antreibbaren Turboladers. Unter einem Lambda-Split-Verfahren ist dabei zu verstehen, dass unterschiedliche Zylinder der Brennkraftmaschine mit einem unterschiedlichen Lambda-Wert betrieben werden. Entsprechend kann über einen Lambda-Split-Wert eine gewünschte Einstellung der Lambda-Werte in den verschiedenen Zylinder erfolgen.

Die wenigstens eine Komponente des Abgassystems, die in dem Temperaturmodell abgebildet ist, und von welcher insbesondere auch die Temperatur ermittelt wird, weist insbesondere einen Turbolader auf. Bevorzugt ist auch, wenn die wenigstens eine Komponente des Abgassystems, die in dem Temperaturmodell abgebildet ist, einen Katalysator und/oder einen Partikelfilter aufweist. Diese Komponenten können, wie später noch näher erläutert wird, jeweils wenigstens zwei, insbesondere drei Teile bzw. Segmente aufweisen bzw. in solche eingeteilt sein, die separat in dem Temperaturmodell berücksichtigt sind, wobei dann insbesondere von einem der wenigstens zwei Teile des Katalysators und/oder des Partikelfilters die Temperatur ermittelt wird.

Die Erfindung macht sich dabei zunutze, dass mit einem solchen Temperaturmodell nicht nur aus einem bestimmten Wert einer Eingangsgröße ein Wert einer Ausgangsgröße, also eine Temperatur einer Komponente des Abgassystems, berechnet werden kann, sondern dass die Berechnungsrichtung auch - zumindest in etwa, im Sinne einer numerischen Invertierung - umgekehrt werden kann, indem für verschiedene Werte der Eingangsgröße solange ein Wert der Ausgangsgröße ermittelt wird, bis dieser einem gewünschten Wert entspricht. Damit ist es also möglich, für eine bestimmte Temperatur einer Komponente im Abgassystem auch ohne Temperatursensor einen möglichst genauen Wert - sozusagen einen Sollwert - zu erhalten und dann einzustellen.

Ebenso kann dafür gesorgt werden, dass die Temperatur an einer anderen Komponente im Abgassystem vorgegebene Schranken bzw. Temperaturgrenze nicht unter- oder überschreitet. Hierzu wird, wenn die Temperatur der bestimmten, in dem Temperaturmodell abgebildeten Komponente des Abgassystems oder eines Teils der Komponente ermittelt wird, bis der Wert der Temperatur innerhalb des vorgegebenen Bereichs liegt, eine Temperaturgrenze einer anderen, in dem Temperaturmodell abgebildeten Komponente (ggf. aber auch von mehreren Komponenten) des Abgassystems berücksichtigt.

Auch können Informationen aus der verfügbaren Sensorik des Abgassystems, z.B. Lambdasonden und Temperatursensoren, falls vorhanden, berücksichtigt werden, um ggf. das Modell anzupassen.

Mit dem vorgeschlagenen Verfahren kann also die Temperatur an einer bestimmten Komponente im Abgassystem (z.B. im Dreiwegekatalysator oder im Partikelfilter) auf einen bestimmten Sollwert eingestellt werden. Während die Temperatur an einer bestimmten Komponente im Abgassystem (z.B. im Dreiwegekatalysator oder im Partikelfilter) auf einen bestimmten Sollwert eingestellt wird, kann gleichzeitig dafür gesorgt werden, dass die obere Schranke für die Temperatur einer anderen Komponente (z.B. Temperatur der Turbine des Turboladers) nicht überschritten wird.

Während die Temperatur an einer bestimmten Komponente im Abgassystem (z.B. im Partikelfilter) auf einen bestimmten Sollwert eingestellt wird, kann ebenso dafür gesorgt werden, dass die untere Schranke für die Temperatur einer anderen Komponente (z.B. Dreiwegekatalysator) nicht unterschritten wird. Wird die Temperatur im Dreiwegekatalysator innerhalb vorgegebener Schranken gehalten, so kann der Katalysator seine maximale Konvertierungsrate erreichen.

Wird die Temperatur im Partikelfilter erhöht bzw. erniedrigt, so kann gezielt ein Rußabbrand eingeleitet oder gestoppt werden. Damit ist es möglich, die Rußschicht im Partikelfilter gezielt so einzustellen, dass ein Optimum zwischen Filtrationseffizienz und Abgasgegendruck erzielt werden kann.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

Kurze Beschreibung der Zeichnungen

Figur 1    zeigt schematisch ein Abgassystem für eine Brennkraftmaschine, bei dem ein erfindungsgemäßes Verfahren durchführbar ist.

Figuren 2 bis 4 zeigen schematisch Teile eines Ablaufs eines erfindungsgemäßen Verfahrens in einer bevorzugten Ausführungsform.

Ausführungsform(en) der Erfindung

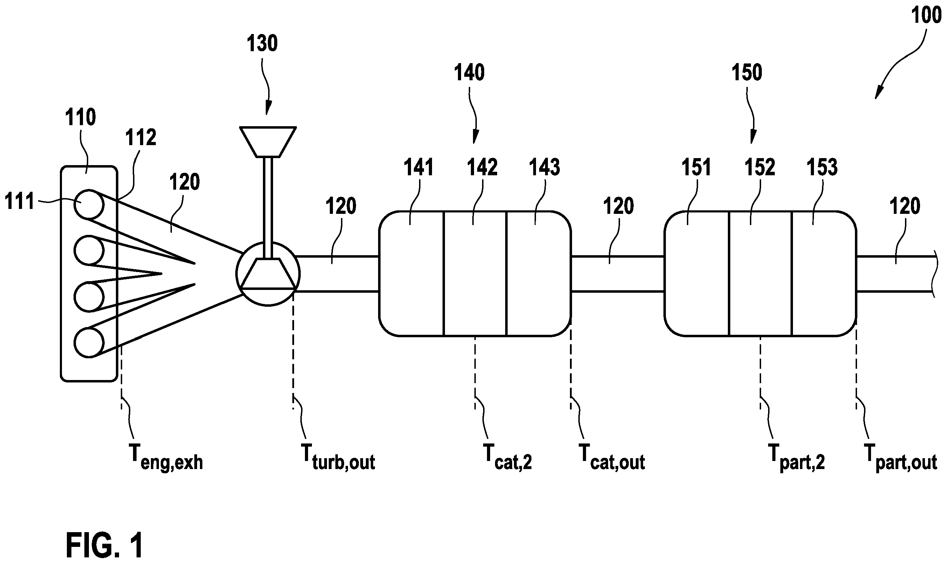

In Figur 1 ist schematisch ein Abgassystem 100 für eine Brennkraftmaschine 110 gezeigt, bei dem ein erfindungsgemäßes Verfahren durchführbar ist. Die Brennkraftmaschine 110 weist beispielhaft vier Zylinder 111 auf, die in einen Abgasauslass 112 münden und über ein geeignetes Rohrsystem 120 an einen Turbolader 130 angebunden sind.

Der Turbolader 130 wiederum ist über ein geeignetes Rohrsystem 120 mit einem Katalysator 140 verbunden. Der Katalysator 140 ist beispielhaft in drei Teile bzw. Segmente 141, 142 und 143 geteilt. Weiterhin schließt sich an den Katalysator 140 über ein geeignetes Rohrsystem 120 ein Partikelfilter 150 an. Der Partikelfilter 150 ist beispielhaft in drei Teile bzw. Segmente 151, 152 und 153 geteilt.

Für verschiedene Stellen bzw. Positionen im Abgassystem 100 sind nun beispielhaft entsprechende Temperaturen gezeigt, die in einem entsprechenden Temperaturmodell berücksichtigt werden können.

Grundlage des vorgeschlagenen Verfahrens ist ein insbesondere echtzeitfähiges Temperaturmodell für das Abgassystem, das insbesondere modular auf die jeweilige Konfiguration des Systems und die jeweiligen darin enthaltenen Komponenten angepasst werden kann. Bei der Auslasstemperatur $T_{eng,exh}$ der Brennkraftmaschine nimmt man dazu an, dass diese Temperatur direkt vom Zündwinkelwirkungsgrad $\eta_{inj}$, dem Lambda-Split-Wert $\eta_\lambda$ und vom Abgasmassenstrom $\dot{m}_{exh}$ abhängt, ggf. aber auch noch von weiteren Stellgrößen wie z.B. Leerlaufdrehzahl oder Parameter für Späteinspritzung, die zur Vereinfachung aber hier nicht aufgeführt werden:

$$T_{eng,exh} = f_1(\eta_{inj},\ \eta_\lambda,\ \dot{m}_{exh}).$$

Ist die Motorauslasstemperatur bekannt, so kann die Eintrittstemperatur der ersten Komponente (z.B. ein Turbolader mit $T_{turb,in}$) im Abgassystem über ein Rohrtemperaturmodell berechnet werden, das im Wesentlichen von der Motorauslasstemperatur $T_{eng,exh}$, der Umgebungstemperatur $T_{amb}$ und dem Abgasmassenstrom $\dot{m}_{exh}$ abhängt:

$$T_{turb,in} = f_2(T_{eng,exh},\ T_{amb},\ \dot{m}_{exh}).$$

Bei der Berechnung der Turbinenaustrittstemperatur bzw. der Austrittstemperatur des Turboladers $T_{turb,out}$ nimmt man an, dass diese Temperatur von der Turbineneintrittstemperatur $T_{turb,in}$ und dem Druckverhältnis $\pi_{turb}$ über den Turbolader bzw. dessen Turbine abhängt:

$$T_{turb,out} = f_3(T_{turb,in},\ \pi_{turb}).$$

Der Katalysator lässt sich je nach Aufbau der Länge nach in mehrere Teile bzw. Segmente unterteilen. Für jedes Segment wird dann die mittlere Temperatur berechnet. Für das in Figur 1 gezeigte Beispiel aus drei Segmenten berechnen sich die mittleren Temperaturen $T_{cat,1}$, $T_{cat,2}$ und $T_{cat,out}$ im vorderen, im mittleren und im hinteren Segment wie folgt:

$$T_{cat,1} = f_4(T_{cat,in},\ T_{amb},\ \dot{m}_{exh},\ \Delta T_{exo}),$$

$$T_{cat,2} = f_4(T_{cat,1},\ T_{amb},\ \dot{m}_{exh},\ \Delta T_{exo}),$$

$$T_{cat,out} = f_4(T_{cat,2},\ T_{amb},\ \dot{m}_{exh},\ \Delta T_{exo}).$$

Hierbei bezeichnet $\Delta T_{exo}$ einen zusätzlichen Beitrag für die Eingangstemperatur am Katalysator, der unter anderem von der Sauerstoffspeicherfähigkeit abhängt. Da bei einem neuen Katalysator die Sauerstoffspeicherfähigkeit am größten ist und mit zunehmendem Alter immer weiter abnimmt, wird auch $\Delta T_{exo}$ immer weiter abnehmen.

Ist die Temperatur im hinteren Segment des Katalysators bekannt, so lässt sich über ein weiteres Rohrtemperaturmodell auch die Eingangstemperatur für einen weiteren Katalysator oder, wie im gezeigten Beispiel, einen Partikelfilter berechnen:

$$T_{part,in} = f_5(T_{cat,out},\ T_{amb},\ \dot{m}_{exh},).$$

Die Temperaturen für den zweiten Katalysator oder Partikelfilter lassen sich analog wie beim ersten Partikelfilter berechnen. Hierzu wird diese Komponente auch wieder der Länge nach in mehrere Segmente unterteilt (z.B. drei Segmente):

$$T_{part,1} = f_6(T_{part,in},\ T_{amb},\ \dot{m}_{exh},\ \Delta T_{exo}),$$

$$T_{part,2} = f_6(T_{part,1},\ T_{amb},\ \dot{m}_{exh},\ \Delta T_{exo}),$$

$$T_{part,out} = f_6(T_{part,2},\ T_{amb},\ \dot{m}_{exh},\ \Delta T_{exo}).$$

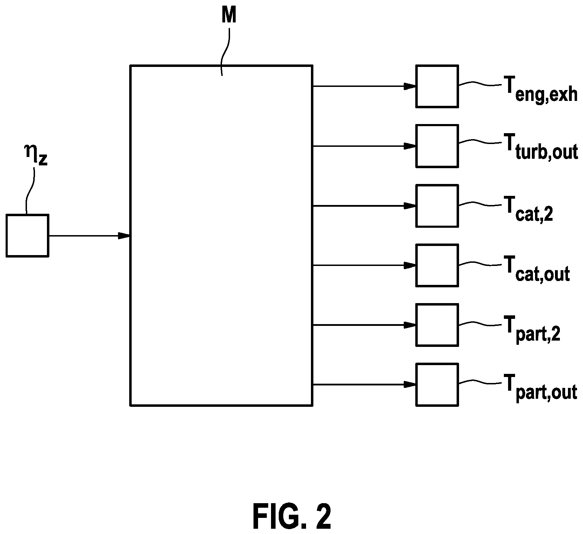

Auf diese Weise ergibt sich somit ein Temperaturmodell M mit beispielhaft der Eingangsgröße des Zündwinkelwirkungsgrads $\eta_z$ und den in Figur 1 gezeigten und vorstehend erläuterten Ausgangsgrößen, wie in Figur 2 schematisch gezeigt.

Natürlich ist es auch möglich, dass auf die oben beschriebene Art und Weise ein Temperaturmodell für komplexere Abgassysteme mit noch mehr Komponenten aufgebaut wird. Die prinzipielle Herangehensweise zur Modellierung bleibt davon unberührt.

Liegt nun ein Vorwärtsmodell wie in Figur 2 gezeigt vor, mit dem die mittleren Temperaturen in den einzelnen Komponenten des Abgassystems bestimmt werden können, so lässt sich über ein entsprechendes inverses Modell die benötigte Temperatur in einer bestimmten Komponente des Abgassystems einstellen.

Hierzu wird das Vorwärtsmodell numerisch invertiert, d.h. so oft mit unterschiedlichen Eingangsgrößen iterativ berechnet, bis sich der Wert der Ausgangsgröße, also hier der Temperatur der bestimmten Komponente, des Vorwärtsmodells auf die gewünschte Temperatur eingestellt hat. Die entsprechenden Einstellungen aus dieser Iteration für die Eingangsgrößen, also beispielsweise für den Zündwinkelwirkungsgrad, für den Lambda-Split-Wert und für ggf. weitere Größen (wie z.B. Leerlaufdrehzahl, Späteinspritzung etc.) werden entsprechend für die Brennkraftmaschine als Sollwerte übernommen und damit dazu verwendet, dass sich in der bestimmten Komponenten bzw. einem Teil davon die entsprechenden Temperaturen einstellen.

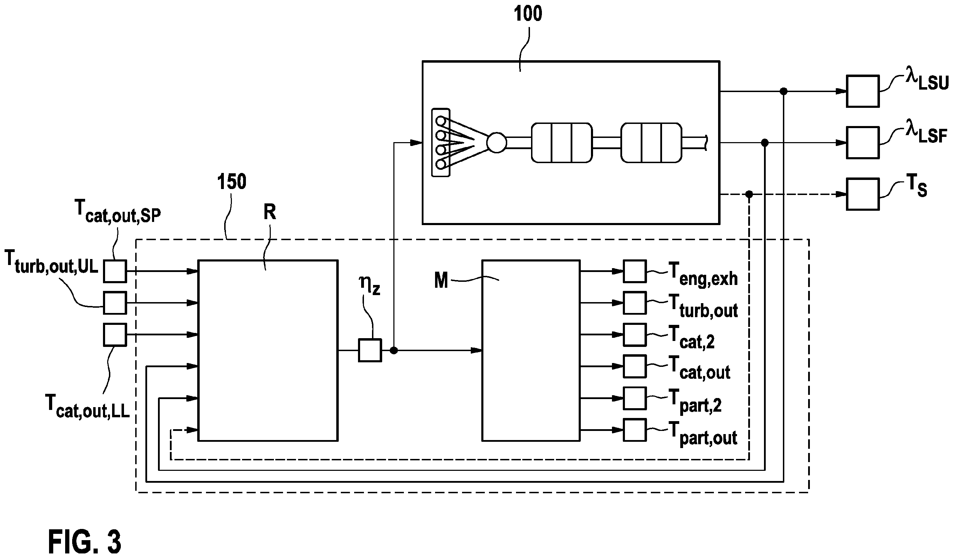

Dies ist in Figur 3 schematisch für die vorstehende Erläuterung mit dem Zündwinkelwirkungsgrad $\eta_z$ als Eingangsgröße des Temperaturmodells M veranschaulicht, wobei der Zündwinkelwirkungsgrad $\eta_z$ wiederum eine Stellgröße im Rahmen eines Regelvorgangs R ist, wie er in einer ausführenden Recheneinheit 190 durchgeführt wird.

Dabei werden im Regelvorgang R neben einem Sollwert $T_{cat,out,SP}$ am Ausgangs des Katalysators und zugehörigem unterem Grenzwert $T_{cat,out,LL}$ sowie einem oberem Grenzwert $T_{turb,out,UL}$ für den Ausgang des Turboladers ggf. auch Messwerte von Sensoren berücksichtigt, nämlich Lambda-Werte $\lambda_{LSU}$ stromaufwärts und $\lambda_{LSF}$ stromabwärts des Katalysators sowie ggf. ein Temperaturwert $T_S$.

Dies zeigt, dass in einer bevorzugten Ausführungsform dieses sog. inversen Temperaturmodells neben dem Sollwert für die Temperatur einer bestimmten Komponente auch noch weitere Randbedingungen (z.B. untere oder obere Schranken) für die Temperatur an einer oder mehreren anderen Komponenten mitberücksichtigt werden können. Damit können relevante Temperaturgrenzen zum Komponentenschutz explizit in dieser Funktion mitberücksichtigt werden.

Ebenso kann auch dafür gesorgt werden, dass ein Katalysator nicht zu stark auskühlt, wenn am Partikelfilter die Temperatur verringert werden soll. Die iterative Suche nach einer entsprechenden Ansteuerung für den elektrisch unterstützten Turbolader würde prinzipiell genauso ablaufen wie oben beschrieben.

Stehen zusätzliche Sensoren im Abgassystem zur Verfügung (z.B. Temperatursensor am Ausgang des Katalysators), so kann man diese Information dazu nutzen, das Abgasmodell entsprechend nachzuführen.

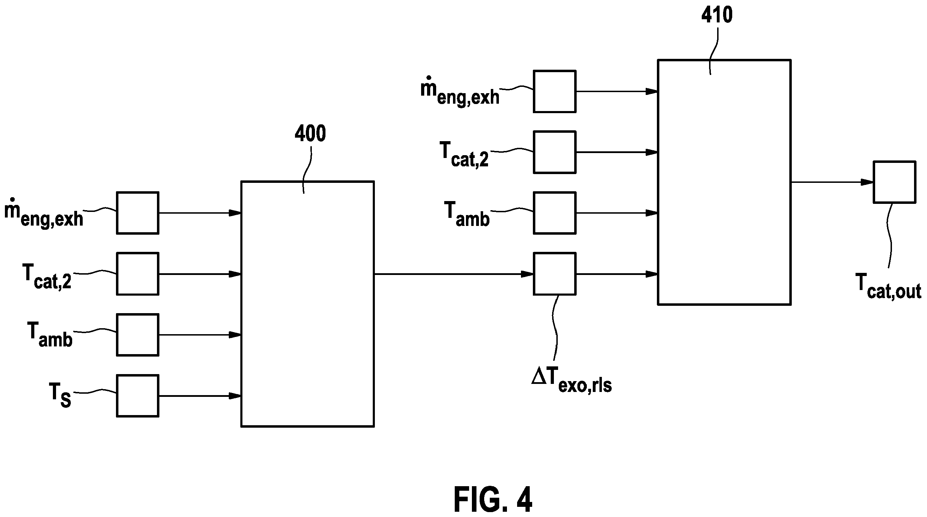

Hierzu kann, wie in Figur 4 gezeigt, ein Modellwert aus der entsprechenden Komponente in einem Schritt 400 mit dem Sensorwert verglichen werden, sodass ein weitere additiver Beitrag $\Delta T_{exo,rls}$ für die Eingangstemperatur der jeweiligen Komponente abgeschätzt werden kann, die erforderlich ist, um den Fehler zwischen Modellwert und Sensorwert in einem Schritt 410 zu minimieren. Hierzu kann z.B. ein rekursiver Least-Squares-Schätzer oder ein Kalmanfilter eingesetzt werden.

**Patentansprüche**

1. Verfahren zum Einstellen einer Temperatur ($T_{cat,out}$) einer Komponente (130, 140, 150) eines an einen Abgasauslass (112) einer Brennkraftmaschine (110) angebundenen Abgassystems (100),
   **dadurch gekennzeichnet, dass**

   unter Verwendung eines Temperaturmodells (M) des Abgassystems, in dem wenigstens eine Komponente (130, 140, 150) des Abgassystems abgebildet ist, für verschiedene Werte für wenigstens eine, eine Temperatur des Abgassystems beeinflussende Eingangsgröße ($\eta_z$, $\dot{m}_{eng,exh}$) solange jeweils eine Temperatur einer bestimmten, in dem Temperaturmodell (M) abgebildeten Komponente (130, 140, 150) des Abgassystems oder eines Teils (141, 142, 143, 151, 152, 153) der Komponente ermittelt wird, bis ein Wert der Temperatur ($T_{cat,out}$) innerhalb eines vorgegebenen Bereichs liegt, und wobei daraufhin die wenigstens eine Eingangsgröße ($\eta_z$, $\dot{m}_{eng,exh}$) auf den zuletzt verwendeten Wert eingestellt wird.

2. Verfahren nach Anspruch 1, wobei die wenigstens eine Eingangsgröße einen Zündwinkelwirkungsgrad ($\eta_z$) der Brennkraftmaschine und/oder einen Lambda-Split-Wert und/oder einen Abgasmassenstrom ($\dot{m}_{eng,exh}$) und/oder eine Ansteuergröße eines elektrisch zumindest unterstützend antreibbaren Turboladers umfasst.

3. Verfahren nach Anspruch 1 oder 2, wobei die wenigstens eine Komponente des Abgassystems, die in dem Temperaturmodell abgebildet ist, und von welcher insbesondere die Temperatur ermittelt wird, einen Turbolader (130) und/oder einen Katalysator (140) und/oder einen Partikelfilter (150) aufweist.

4. Verfahren nach einem der vorstehenden Ansprüche, wobei die wenigstens eine Komponente des Abgassystems, die in dem Temperaturmodell abgebildet ist, einen Katalysator (140) und/oder einen Partikelfilter (150) aufweist.

**5.** Verfahren nach Anspruch 4, wobei der Katalysator (140) und/oder der Partikelfilter (150) jeweils wenigstens zwei Teile (141, 142, 143, 151, 152, 153), aufweisen, die separat in dem Temperaturmodell (M) berücksichtigt sind, und wobei insbesondere von einem der wenigstens zwei Teile des Katalysators und/oder des Partikelfilters die Temperatur ermittelt wird.

**6.** Verfahren nach einem der vorstehenden Ansprüche, wobei, wenn die Temperatur der bestimmten, in dem Temperaturmodell (M) abgebildeten Komponente des Abgassystems oder eines Teils der Komponente ermittelt wird, bis der Wert der Temperatur innerhalb des vorgegebenen Bereichs liegt, eine Temperaturgrenze ($T_{turb,out,UL}$, $T_{cat,out,LL}$) einer anderen, in dem Temperaturmodell abgebildeten Komponente des Abgassystems (100) berücksichtigt wird.

**7.** Verfahren nach einem der vorstehenden Ansprüche, wobei die Temperatur der bestimmten Komponente des Abgassystems (100) in einem iterativen Verfahren ermittelt wird.

**8.** Verfahren nach einem der vorstehenden Ansprüche, wobei das Temperaturmodell (M) mittels wenigstens eines im Abgassystem (100) vorgesehenen Temperatursensors angepasst wird.

**9.** Recheneinheit (190), die dazu eingerichtet ist, alle Verfahrensschritte eines Verfahrens nach einem der vorstehenden Ansprüche durchzuführen.

**10.** Computerprogramm, das eine Recheneinheit (190) dazu veranlasst, alle Verfahrensschritte eines Verfahrens nach einem der Ansprüche 1 bis 8 durchzuführen, wenn es auf der Recheneinheit (190) ausgeführt wird.

**11.** Maschinenlesbares Speichermedium mit einem darauf gespeicherten Computerprogramm nach Anspruch 10.

**Claims**

**1.** Method for setting a temperature ($T_{cat,out}$) of a component (130, 140, 150) of an exhaust gas system (100) which is connected to an exhaust gas outlet (112) of an internal combustion engine (110), **characterized in that**

> using a temperature model (M) of the exhaust gas system in which at least one component (130, 140, 150) of the exhaust gas system is replicated, a respective temperature of a specified component (130, 140, 150) of the exhaust gas system replicated in the temperature model (M), or of a part (141, 142, 143, 151, 152, 153) of the component, is ascertained for different values for at least one input variable ($\eta_z$, $\dot{m}_{eng,exh}$) influencing a temperature of the exhaust gas system until a value of the temperature ($T_{cat,out}$) lies within a predetermined range, and
wherein, in response to this, the at least one input variable ($\eta_z$, $\dot{m}_{eng,exh}$) is set to the value last used.

**2.** Method according to Claim 1, wherein the at least one input variable is an ignition angle efficiency ($\eta_z$) of the internal combustion engine and/or a lambda-split value and/or an exhaust gas mass flow ($\dot{m}_{eng,exh}$) and/or an actuating variable of a turbocharger that can be at least assistively electrically driven.

**3.** Method according to Claim 1 or 2, wherein the at least one component of the exhaust gas system which is replicated in the temperature model and of which in particular the temperature is ascertained comprises a turbocharger (130) and/or a catalytic converter (140) and/or a particle filter (150).

**4.** Method according to one of the preceding claims, wherein the at least one component of the exhaust gas system which is replicated in the temperature model comprises a catalytic converter (140) and/or a particle filter (150).

**5.** Method according to Claim 4, wherein the catalytic converter (140) and/or the particle filter (150) each comprise at least two parts (141, 142, 143, 151, 152, 153), which are separately taken into account in the temperature model (M), and wherein in particular the temperature of one of the at least two parts, the catalytic converter and/or the particle filter, is ascertained.

**6.** Method according to one of the preceding claims, wherein, if the temperature of the specified component of the exhaust gas system replicated in the temperature model (M), or of a part of the component, is ascertained until the value of the temperature lies within the predetermined range, a temperature limit ($T_{turb,out,UL}$, $T_{cat,out,LL}$) of another component of the exhaust gas system (100) replicated in the temperature model is taken into account.

**7.** Method according to one of the preceding claims, wherein the temperature of the specified component of the exhaust gas system (100) is ascertained in an iterative process.

**8.** Method according to one of the preceding claims, wherein the temperature model(M) is adapted by means of at least one temperature sensor provided in the exhaust gas system (100).

9. Computing unit (190) which is designed to carry out all of the method steps of a method according to one of the preceding claims.

10. Computer program which causes a computing unit (190) to carry out all of the method steps of a method according to one of Claims 1 to 8 when it is run on the computing unit (190).

11. Machine-readable storage medium with a computer program according to Claim 10 stored on it.

**Revendications**

1. Procédé permettant de régler une température ($T_{cat,out}$) d'un composant (130, 140, 150) d'un système d'échappement (100) raccordé à une sortie de gaz d'échappement (112) d'un moteur à combustion interne (110),
**caractérisé en ce qu'**en

utilisant un modèle de température (M) du système de gaz d'échappement dans lequel au moins un composant (130, 140, 150) du système de gaz d'échappement est représenté, pour différentes valeurs pour au moins une grandeur d'entrée ($\eta_z$, $\dot{m}_{eng,exh}$) influant sur la température du système de gaz d'échappement, respectivement une température d'un composant déterminé (130, 140, 150), représenté dans le modèle de température (M), du système de gaz d'échappement ou d'une partie (141, 142, 143, 151, 152, 153) du composant est établie jusqu'à ce qu'une valeur de la température ($T_{cat,out}$) se trouve à l'intérieur d'une plage prédéfinie, et dans lequel, ensuite ladite au moins une grandeur d'entrée ($\eta_z$, $\dot{m}_{eng,exh}$) est réglée sur la dernière valeur utilisée.

2. Procédé selon la revendication 1, dans lequel ladite au moins une grandeur d'entrée comprend un taux de rendement d'angle d'allumage ($\eta_z$) du moteur à combustion interne et/ou une valeur de division lambda et/ou un débit massique de gaz d'échappement ($\dot{m}_{eng,exh}$) et/ou une grandeur de pilotage d'un turbocompresseur pouvant être entraîné électriquement au moins en soutien.

3. Procédé selon la revendication 1 ou 2, dans lequel ledit au moins un composant du système de gaz d'échappement qui est représenté dans le modèle de température et dont en particulier la température est établie, présente un turbocompresseur (130) et/ou un catalyseur (140) et/ou un filtre à particules (150).

4. Procédé selon l'une quelconque des revendications précédentes, dans lequel au moins un composant du système de gaz d'échappement qui est représenté dans le modèle de température présente un catalyseur (140) et/ou un filtre à particules (150).

5. Procédé selon la revendication 4, dans lequel le catalyseur (140) et/ou le filtre à particules (150) présentent respectivement au moins deux parties (141, 142, 143, 151, 152, 153) qui sont pris en compte séparément dans le modèle de température (M), et dans lequel la température est établie en particulier d'une des au moins deux parties du catalyseur et/ou du filtre à particules.

6. Procédé selon l'une quelconque des revendications précédentes, dans lequel, lorsque la température du composant déterminé, représenté dans le modèle de température (M), du système de gaz d'échappement ou d'une partie du composant est établie jusqu'à ce que la valeur de la température se trouve à l'intérieur de la plage prédéfinie, une limite de température ($T_{turb,out,UL}$, $T_{cat,out,LL}$) d'un autre composant, représenté dans le modèle de température, du système de gaz d'échappement (100) est prise en compte.

7. Procédé selon l'une quelconque des revendications précédentes, dans lequel la température du composant déterminé du système de gaz d'échappement (100) est établie par un procédé itératif.

8. Procédé selon l'une quelconque des revendications précédentes, dans lequel le modèle de température (M) est adapté au moyen d'au moins un capteur de température prévu dans le système de gaz d'échappement (100).

9. Unité de calcul (190) qui est conçue pour exécuter toutes les étapes de procédé d'un procédé selon l'une quelconque des revendications précédentes.

10. Programme informatique qui fait qu'une unité de calcul (190) exécute toutes les étapes de procédé d'un procédé selon l'une quelconque des revendications 1 à 8 lorsqu'il est exécuté sur l'unité de calcul (190).

11. Support de stockage lisible par machine comprenant un programme informatique selon la revendication 10, stocké sur celui-ci.

FIG. 1

EP 4 022 178 B1

EP 4 022 178 B1

FIG. 2

**FIG. 3**

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1067279 A2
- DE 102009051475 A1
- DE 102004033394 B3
- EP 1761693 A1
- EP 1329627 A2